# FASCICULE DE BREVET EUROPEEN

(11) **EP 2 717 270 B1**
(45) Date de publication et mention de la délivrance du brevet: **04.01.2017**
(21) Numéro de dépôt: 13187317.6
(22) Date de dépôt: 04.10.2013
(51) Int. Cl.: G21F 9/16, C03C 3/066, G21F 9/30, C03C 1/00

(54) **Matrice d'immobilisation de déchets radioactifs comprenant au moins des sels alcalins et procédé d'immobilisation de ces déchets radioactifs pour obtenir la matrice d'immobilisation**
Matrix zur Immobilisierung von radioaktiven Abfällen, die mindestens Alkalisalze beinhalten, und Immobilisierungsverfahren dieser radioaktiven Abfälle um eine Immobilisierungsmatrix zu erhalten
Matrix for immobilising radioactive waste including at least alkaline salts and method for immobilising said radioactive waste in order to obtain the immobilisation matrix

(30) Priorité: 04.10.2012 FR 1259455
(43) Date de publication de la demande: 09.04.2014
(73) Titulaire: O.T.N.D. - ONET TECHNOLOGIES NUCLEAR DECOMMISSIONING, 13258 Marseille Cedex 09 (FR)
(72) Inventeur: Rottner, Bernard, 13009 Marseille (FR); Marrillet, José, 34970 Lattes-Maurin (FR)
(74) Mandataire: Debay, Yves

(56) Documents cités:
- FR-A1- 2 888 576
- US-A1- 2006 122 450
- US-A1- 2008 020 918

## Description

### DOMAINE TECHNIQUE DE L'INVENTION

La présente invention se rapporte au domaine du stockage de déchets nucléaires, et plus particulièrement à un procédé d'immobilisation de déchets radioactifs alcalins éventuellement boratés.

### ARRIÈRE-PLAN TECHNOLOGIQUE DE L'INVENTION

Le stockage des déchets nucléaires est un enjeu crucial. En effet, ces déchets qui ne sont pas réutilisables actuellement doivent être stockés de façon sûre. Ces déchets radioactifs peuvent être des solutions d'évaporateur de réacteurs nucléaires de type réacteur à eau pressurisée (REP) ou *Pressurized water reactor* en anglais (PWR) ou de la soude ou solution de soude issus de la destruction de sodium radioactif qui est utilisé comme fluide caloporteur dans les réacteurs nucléaires au sodium.

D'une manière générale, un déchet radioactif ne peut être mis en stockage définitif que sous forme d'un bloc solide de qualité vérifiée. Ce principe est systématique en France pour les déchets supérieurs à la catégorie TFA (Très Faiblement Actif), c'est-à-dire pour les catégories FA (Faiblement Actif), MA (Moyennement Actif) et HA (Haute Activité). Ce principe est également souvent appliqué dans le monde.

Le fait que le bloc solide soit de « qualité vérifiée » signifie dans tous les cas qu'il doit respecter un critère de résistance à la compression et un critère de lixiviation d'autant plus contraignant que le déchet est radioactif. Par exemple, en France, le bloc solide doit résister à une compression de 8 MPa minimum. Dans d'autres pays, le bloc solide doit résister à des compressions allant de 3,5 MPa à 5 MPa.

L'invention décrite ci-après s'adresse essentiellement aux mélanges radioactifs FA ou MA, d'hydroxydes, et/ou nitrates et/ou borates de lithium, et/ou de sodium et/ou de potassium. Le terme mélange est un terme général car un ou plusieurs de ces composants peuvent ne pas être présents. Dans un exemple extrême, le mélange peut être constitué d'un seul composé, par exemple un nitrate de sodium. Ce mélange est le composant principal mais on peut y trouver d'autres sels métalliques, notamment radioactifs, à l'état de traces ou en concentrations relativement faibles, quelques composés organiques, et parfois d'autres anions tels que les chlorures, et/ou les sulfates, et/ou les phosphates, et/ou les carbonates. Les déchets TFA ne sont pas complètement exclus du champ d'application et peuvent être considérés comme mélange, même s'ils peuvent être mis en stockage sans solidification préalable parce que, dans tous les cas, ils doivent respecter un critère de lixiviation.

Il est connu dans l'art antérieur plusieurs moyens permettant d'obtenir un bloc solide à partir de concentrat d'évaporateur.

En effet, l'incorporation de ce type de déchet dans une matrice cimentaire constitue le procédé standard. Cependant, l'incorporation est délicate à cause des interactions avec le ciment et surtout de la très haute solubilité de ces composés.

Par exemple, le brevet européen EP 0 319 398 enseigne une matrice cimentaire particulière, destinée entre autres à l'immobilisation du concentrat d'évaporateur. L'exemple 2 de ce brevet aboutit à l'incorporation de 1 L de concentrat boraté dans 1,75 L de bloc solide. Le brevet n'indique pas la teneur du concentrat en matières solides mais nos essais ont montré que la solubilité est inférieure à 160 g/L pour des pH inférieurs à 12. Le taux d'incorporation est donc inférieur à 90 g d'extrait sec sous forme d'anhydride borique (B₂O₃) par litre de produit final solide. De façon générale, dans un matériau composite, une matrice (plastique, métal, céramique, cimentaire ou leurs combinaisons) est une matière servant de liant de manière à incorporer les polluants dans un bloc solide et à les isoler de l'action de l'eau.

Le brevet européen EP 0 929 079 enseigne une incorporation par polymérisation à froid. Le taux d'incorporation est alors de 630 g d'extrait sec sous forme d'anhydre borique (B₂O₃) et d'oxyde de sodium (Na₂O) par litre de produit final solide, ce qui est significativement mieux que l'incorporation par matrice cimentaire, mais reste relativement faible.

Le brevet français FR 2 485 243 enseigne la vitrification des concentrats d'évaporateur avec un ajout de silicates ou d'oxyde de plomb. Mais ce brevet ne donne pas d'information sur les taux d'incorporation obtenus. Le brevet français FR 2 550 654 donne plus de détails dans sa description de l'état de l'art où un procédé utilisant le procédé du brevet FR 2 485 243 donne 14% en masse d'anhydre borique et 10% d'oxyde de sodium dans une matière vitreuse, soit 600 g d'extrait sec de B₂O₃ et de Na₂O par litre de produit final solide, ce qui est comparable à la polymérisation à froid.

Le brevet français FR 2 550 654 enseigne une composition de verre stable à la lixiviation comportant du B₂O₃, du Na₂O et du ZnO. Le B₂O₃ et le Na₂O peuvent provenir du concentrat à immobiliser. Le ZnO est un additif dont la teneur dans le verre final peut être aussi faible que 10% en moles selon le brevet. Le taux d'incorporation est alors de 1940 g d'extrait sec de B₂O₃ et de Na₂O par litre de produit final solide, ce qui est remarquable.

On devra noter que les taux d'incorporation des premiers brevets cités sont exprimés de manière la plus favorable possible, c'est-à-dire en supposant que le sodium est présent en quantité voulue dans le déchet à stocker. Dans le cadre de ce dernier brevet, une large fourchette de teneur en sodium est autorisée avec un rapport molaire Na₂O/B₂O₃ allant de 0,10 à 0,6.

Cependant, cette fourchette n'est pas assez importante pour les concentrats de déchet qui sont traités dans la présente invention. Car les concentrats de déchets que se propose de traiter la présente invention possèdent des rapports molaires d'au moins 0,6 et donc au mieux à la limite des possibilités du brevet FR 2 550 654.

De même, il est connu dans l'art antérieur plusieurs moyens permettant d'obtenir un bloc solide à partir de concentrats de soude issus de la destruction de sodium radioactif qui est utilisé comme fluide caloporteur dans les réacteurs nucléaires au sodium.

Le sodium et le NaK qui est un alliage de sodium et de potassium doivent être inertés avant conditionnement définitif. En effet, le sodium et le potassium réagissant fortement avec l'air et l'eau, leur forte réactivité chimique doit être neutralisée.

Cette neutralisation est souvent réalisée par hydrolyse ou carbonatation, puis conditionnement final du produit de la réaction d'inertage pulvérulent et très soluble en un bloc solide insoluble.

La solution qu'a choisie EDF pour le sodium de SuperPhénix est la cimentation. Les 5500 t de sodium sont hydrolysées et la soude qui en résulte est cimentée dans 36 700 m³ de béton. Le taux d'incorporation est alors de 200 g de Na₂O par litre de solide final.

Le brevet FR 2 550 654 cité plus haut pourrait s'appliquer à ce cas par l'ajout d'acide borique et d'oxyde de zinc à la soude pour vitrifier l'ensemble. Dans le meilleur des cas, le taux d'incorporation est de 670 g de Na₂O par litre de solide final.

Le document FR 2 888 576 enseigne l'ajustement du potentiel redox d'une fritte de verre par ajout de couples redox appropriés afin de fixer les valences des constituants de déchets aux valeurs permettant de mieux les incorporer par vitrification.

Le document US 2008/020918 enseigne une méthode d'immobilisation de déchets dangereux ou radioactifs alcalins dans un verre silicaté.

Le document US 2006/122450 enseigne une méthode de vitrification de résine usée contenant des métaux de transition.

Pour ces trois derniers documents, les températures d'élaboration du produit final sont nécessairement importantes. Or, l'homme du métier sait que les mélanges riches en alcalins et en borates se volatilisent partiellement entraînant du césium radioactif, qui est un alcalin, dans les fumées. Cela pose donc des problèmes de traitement de fumées.

### DESCRIPTION GÉNÉRALE DE L'INVENTION

La présente invention a pour objet de proposer un procédé d'immobilisation des déchets radioactifs selon la revendication 1.

À cet effet, l'invention concerne une matrice destinée à immobiliser des déchets radioactifs selon la revendication 10.

D'autres modes de réalisation sont décrits dans les revendications dépendantes.

L'invention, avec ses caractéristiques et avantages, ressortira plus clairement à la lecture de la description faite en référence aux dessins annexés dans lesquels :
La figure 1 représente une courbe de solubilité des composants d'un déchet radioactif provenant d'évaporateur en fonction du pH.
La figure 2 représente le schéma d'un exemple de procédé d'extraction de borax comprenant trois cycles d'extraction de borax avec ajustement du pH.
La figure 3 représente un four de chauffage et d'agitation pouvant être utilisé pour le chauffage des déchets radioactifs.
La figure 4 représente le schéma d'un exemple du procédé d'extraction des borates avec trois cycles d'extraction de borax sans ajustement de pH.
La figure 5 représente le schéma général du procédé d'obtention d'une matrice d'immobilisation à partir de déchets radioactifs provenant d'évaporateur dans le monde.
La figure 6 représente le schéma d'un exemple de procédé d'extraction des borates pour un concentrat de déchets radioactifs avec deux cycles d'extraction de borax.
La figure 7 représente le schéma général d'un exemple du procédé d'obtention d'une matrice d'immobilisation à partir de la soude issue de l'inertage du sodium radioactif.

### DESCRIPTION DES MODES DE RÉALISATION PRÉFÉRÉS DE L'INVENTION

Le procédé d'immobilisation va maintenant être décrit.

Dans un premier temps, le procédé est décrit pour des déchets radioactifs initiaux correspondant à un concentrat d'évaporateur. Dans un deuxième temps, le procédé est décrit pour des déchets radioactifs initiaux correspondant à un concentrat provenant de l'inertage du sodium.

Le tableau 1 représente un exemple de composition d'un extrait sec de concentrat d'évaporateur traité par la présente invention.

Le procédé selon l'invention comprend une étape de prétraitement du concentrat de déchets radioactifs où sont extraits de 70% à 90% du borax (Na₂B₄O₇) à partir du concentrat de déchets radioactifs. Cette étape de prétraitement permet d'obtenir du borax purifié, d'une part, et des déchets radioactifs prétraités, d'autre part.

Divers procédés d'extraction de borates ou d'acide borique du concentrat d'évaporateur ont été étudiés dans l'art antérieur. Il existe notamment le procédé par précipitation, le procédé par filtration membranaire et le procédé par entraînement vapeur.

À condition d'être suffisamment peu radioactif, et suffisamment pur, l'acide borique résultant de la récupération des borates peut être réutilisé par le site nucléaire ayant produit le concentrat d'évaporateur, pour réguler la puissance des réacteurs. À défaut, il peut être évacué en tant que déchet de catégorie inférieure à celle du déchet d'origine, par exemple TFA, ou en tant que déchet non radioactif.

Le principal avantage de l'extraction des borates est la diminution du volume de déchet final à placer en stockage définitif. En effet, le mètre-cube de déchet radioactif à stocker de manière définitive en tant que FA ou MA revient extrêmement cher, d'autant plus cher que la catégorie est élevée.

Le procédé choisi est le procédé de dissolution/précipitation qui présente une succession d'étapes de dissolution et de précipitation du concentrat à traiter.

Ce procédé présente l'avantage sur les autres procédés d'extraire le borax (Na₂B₄O₇) plutôt que l'acide borique. En effet, on extrait ainsi des déchets initiaux, non seulement les espèces borées, mais aussi une partie des alcalins et on parvient donc à une extraction plus significative de la matière sèche. Cela a pour conséquence une minimisation du volume de déchet final.

Nous avons dans premier temps étudié la solubilité d'un mélange d'acide borique et de nitrates de potassium et de sodium en fonction du pH et de la température.

Lorsque l'on augmente le pH d'une solution d'acide borique H₃BO₃, par exemple avec de la soude NaOH, cet acide va se dissocier, et produire successivement du pentaborate (B₅O₈⁻), de l'hydrogénotétraborate (HB₄O₇⁻), du triborate (B₃O₅⁻), du tétraborate (B₄O₇²⁻) et enfin du métaborate (BO₂⁻ ou H₂BO₃⁻).

Selon nos essais, le pentaborate et l'hydrogénotétraborate d'une part et le métaborate d'autre part sont les espèces les plus solubles. L'acide non dissocié (H₃BO₃) et le tétraborate sont les espèces les moins solubles. Dans un mélange de borates d'alcalins, sodium et potassium, le tétraborate de sodium, ou borax, précipite préférentiellement.

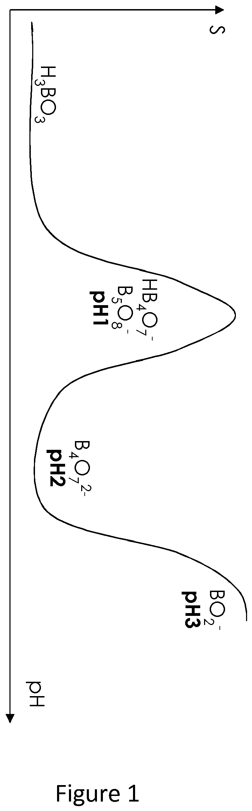

La courbe de solubilité (S) en fonction du pH est représentée sur la figure 1.

Les effets constatés de nos essais de solubilité sont les suivants :
- La solubilité augmente rapidement avec la température, en conservant la forme de la courbe représentée sur la figure 1 ;
- Le remplacement du cation Na⁺ par du K⁺ produit un décalage significatif vers les pH élevés (jusqu'à 2 points de pH) du pic central (pH1).

Ce dernier effet n'était pas du tout annoncé dans la littérature et a une influence non négligeable sur le procédé. L'application du procédé aux PWR occidentaux où l'on utilise de la lithine LiOH pour ajuster le pH du circuit primaire sera donc différente de celle pour les PWR russes ou VVER, où l'on utilise de la potasse KOH pour ajuster le pH du circuit primaire. On imagine que le remplacement du Na par du Li aura l'effet inverse que par du K, c'est-à-dire un décalage du pic de solubilité vers les pH faibles.

Avec notre exemple de composition, riche en potassium où K/Na = 80/20, et correspondant donc plus à un VVER, le creux de solubilité du tétraborate se situe vers pH2 = 9,2, le pic de solubilité vers pH1 = 7 et l'épaulement vers pH3 = 10,5. Avec une composition où l'on inverse les proportions de potassium et sodium, l'ensemble vers les pH faibles est décalé de 0,5 à 1 point de pH.

Au vu de cette courbe de solubilité, l'ingénieur aura tendance à baser son procédé de précipitation des borates sur des ajustements de pH couplés à des changements de température. Ainsi, les borates sont solubilisés vers pH1 ou pH3 à température élevée entre 60°C et 100°C, et sont précipités à pH2 et température faible entre 0°C et 25°C.

La solubilité dans les conditions de dissolution à 60°C dépasse 70% en gramme de soluté équivalent acide borique par gramme de solution, pour moins de 5% dans les conditions de précipitation à 25°C, ce qui autorise la récupération de plus de 90% des borates.

Le procédé comprend au moins un cycle d'extraction du borax comprenant une étape de dissolution ou ajustement de la concentration et une étape de précipitation. Plus le nombre de cycles d'extraction de borax est élevé, plus le facteur de décontamination est important.

Le facteur de décontamination correspond au rapport de l'activité du déchet initial et de l'activité du borax extrait, l'activité exprimée étant en becquerel par gramme de matière sèche

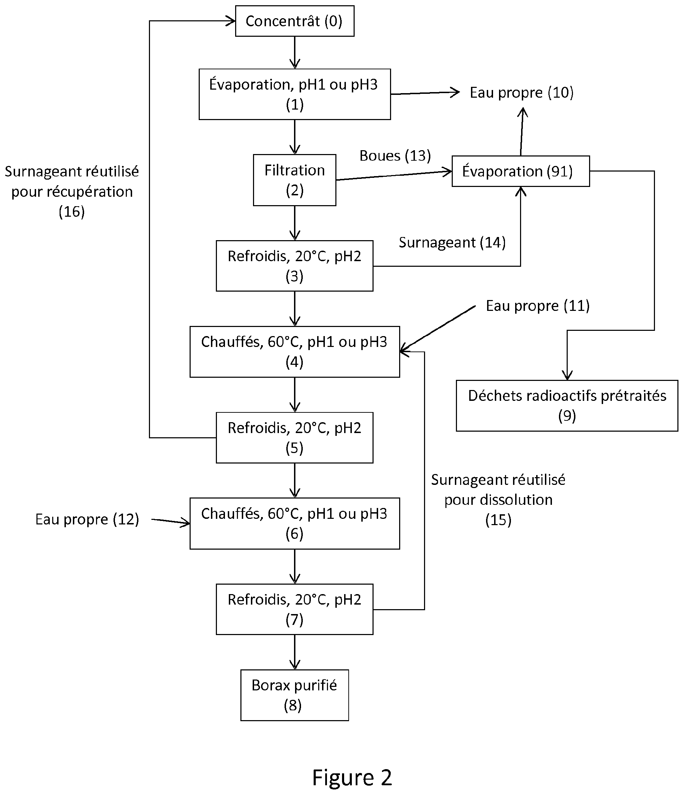

La figure 2 représente un exemple du procédé, que l'ingénieur aura tendance à utiliser, comprenant trois cycles d'extraction du borax.

Chaque ajustement de pH nécessite l'ajout de soude, par exemple, ou d'acide nitrique, par exemple, selon le sens de pH désiré.

Dans cette figure 2, la première étape (1) est une évaporation d'un concentrat de déchets radioactifs initiaux (0) pour retirer de l'eau propre (10) avec un ajustement de la valeur de pH à pH1 ou pH3 en terminant avec une température de concentrat d'au moins 60°C.

Dans une deuxième étape (2), le concentrat est filtré afin d'en retirer les matières en suspension contenues dans le concentrat. Ces matières sont récupérées sous forme de boues (13).

Il peut être avantageux de réaliser tout ou une partie de l'évapo-concentration de la première étape (1) après la deuxième étape (2) de filtration afin d'éviter la précipitation de borax lors de la deuxième étape (2).

Dans une troisième étape (3), le concentrat est refroidi à une température de 20°C et subi un ajustement de son pH à pH2 de manière à précipiter la plus grande partie du borax. Le borax solide est séparé du surnageant (14).

Ces trois premières étapes constituent le premier cycle d'extraction de borax.

Les boues (13) et le surnageant (14) sont séchés par évaporation et constituent les déchets radioactifs prétraités.

Dans une quatrième étape (4), le borax est mélangé avec le surnageant (15) provenant de l'étape ultérieure (7) et avec un complément d'eau propre (11). Le borax est dissout à une température de 60°C. Le pH du concentrat est aussi ajusté à une valeur pH1 ou pH3.

Dans une cinquième étape (5), la solution obtenue par l'étape précédente (4) est refroidie à une température de 20°C et subit un ajustement de son pH à pH2 de manière à précipiter la plus grande partie du borax. Le borax solide est séparé du surnageant (16), lequel est récupéré pour être ajouté à un concentrat de déchets radioactifs initiaux non encore traité (0).

Ces quatrième et cinquième étapes constituent le deuxième cycle d'extraction de borax.

Dans une sixième étape (6), le borax est dissout dans de l'eau propre (12) chauffée jusqu'à une température de 60°C. Le pH du concentrat est aussi ajusté à une valeur pH1 ou pH3.

Dans une septième étape (7), la solution obtenue par l'étape précédente (6) est refroidie à une température de 20°C et subit un ajustement de son pH à pH2 de manière à précipiter la plus grande partie du borax. Le borax solide purifié (8) est séparé du surnageant (15), lequel est récupéré pour dissoudre un autre lot de borax à la quatrième étape (4) du procédé.

Ces sixième et septième étapes constituent le troisième cycle d'extraction de borax.

La réutilisation des surnageants permet de recycler les borates contenus dans ces précipités pour garantir une récupération importante supérieure à 90%.

Le résidu radioactif qui constitue les déchets radioactifs prétraités, est donc constitué par le mélange du surnageant récupéré lors de la troisième étape et des boues récupérées lors de la deuxième étape, ce mélange ayant subi une évaporation (91).

Les essais ont montrés que :
- les espèces radioactives solubles telles que le césium et le cobalt complexé avec des composants organiques ne précipitent pas avec le borax et partent donc dans les déchets radioactifs prétraités,
- les espèces radioactives insolubles en milieu alcalin, telles que les métaux en général, sont filtrées et partent avec les boues,
- la teneur résiduelle en éléments radioactifs dans le borax purifié est très sensible à la qualité de la filtration. Pour obtenir un facteur de décontamination de plus de 100 lors du premier cycle d'extraction de borax, il faut une filtration ayant un seuil de coupure de 0,1 µm. Ce seuil de coupure est obtenu en général par une filtration tangentielle. La répétition de l'étape de filtration à chaque cycle de dissolution/précipitation améliore encore le facteur de décontamination,
- le choix de pH1 ou pH3 est déterminé par les objectifs de décontamination. Un pH à pH3 permet de mieux précipiter les cations radioactifs,
- pour faire évoluer le pH de pH1 à pH2, il faut environ 1 mol de soude pour 1 mol de tétraborate. En sens inverse, il faut 1 mol d'acide nitrique pour 1 mol de tétraborate. Avec trois allers-retours de valeur de pH, on injecte l'équivalent de 3 mol de nitrate de sodium (NaNO₃) pour 1 mol de borax extrait.

Les ajustements de pH réalisés pendant ce procédé reviennent à près de la moitié de gain de masse obtenu par l'extraction des borates dans le cas d'une extraction telle que décrite ci-dessus. En outre, on constate que l'on ajoute plus de sodium sous forme de soude que l'on en retire sous forme de borax.

De ce fait, le procédé d'extraction de borax selon l'invention se base essentiellement sur les différences de température qui provoquent des différences de solubilité suffisantes pour récupérer jusqu'à 95% des borates, sans ajustement de pH. L'ajustement de pH ne sera nécessaire au début du procédé pour obtenir un concentrat de pH entre 8,5 et 9,7, de préférence entre 9 et 9,5, de préférence encore de 9,2, de manière à se placer au minimum de solubilité des borates tout en obtenant la précipitation des hydroxydes métalliques.

Ainsi le procédé de prétraitement selon l'invention peut comprendre un premier cycle d'extraction de borax comprenant au moins :
- une étape de filtration des déchets radioactifs initiaux pour retirer des boues ;
- une étape de concentration par évaporation pour atteindre la limite de la solubilité des borax à une température comprise entre 60°C et 100°C,
- une étape de précipitation par refroidissement à une température comprise entre 0°C et 25°C, la partie surnageant obtenue à partir de cette étape étant retirée,

Suite au premier cycle, le procédé de prétraitement peut comprendre d'autres cycles d'extraction de borax comprenant au moins :
- une étape de dissolution par ajout d'eau à une température comprise entre 60°C et 100°C,
- une étape de précipitation par refroidissement à une température comprise entre 0°C et 25°C, la partie surnageant obtenue à partir de cette étape étant retirée.

L'étape de concentration par évaporation consiste à évaporer par chauffage la solution obtenue suite à l'étape de filtration, jusqu'à atteindre la limite de solubilité à 100°C. Il est possible d'augmenter cette limite de solubilité par ajustement de pH, par exemple vers pH1 ou pH3.

L'étape de précipitation du premier cycle consiste à refroidir et optionnellement ajuster le pH à pH2. Cette étape peut être réalisée dans la même cuve que l'étape de dissolution.

À la fin du premier cycle, on obtient un précipité et un surnageant, le précipité comprenant essentiellement du borax ou d'autres borates si on précipite à une valeur de pH différente de pH2.

Optionnellement, entre l'étape de dissolution et l'étape de précipitation du ou des cycles suivant le premier cycle, peuvent être ajoutées une étape de filtration pour retirer des boues et une étape de concentration par évaporation pour atteindre la limite de solubilité des borates à une température comprise entre 60°C et 100°C. En principe, tous les insolubles ont été éliminés lors du premier cycle. Toutefois, il peut subsister quelques particules fines que l'étape de filtration optionnelle élimineront plus efficacement. Lorsque l'on ne met pas en oeuvre la filtration, la dissolution est réalisée directement de manière à atteindre la limite de solubilité, et il n'y a donc pas lieu de concentrer. En revanche, lorsque l'on met en oeuvre la filtration, il faut diluer au-delà de la limite de solubilité et il faut donc concentrer avant de précipiter.

Optionnellement, l'étape de filtration du premier cycle est précédée d'une étape d'ajustement de la concentration des déchets radioactifs initiaux par ajout ou extraction d'eau.

Le concentrat de déchet initial est obtenu sous forme de solution plus ou moins concentrée, voire de sel, sec et solide.

L'étape d'ajustement de la concentration sert à limiter les quantités à filtrer pour un concentrat de déchets radioactifs initiaux très dilués ou à dissoudre complètement les sels alcalins et boriques pour un concentrat de déchets radioactifs initiaux solide ou à forte concentration.

L'étape d'ajustement de concentration peut ainsi bien consister en un apport d'eau qu'en une extraction d'eau.

Cette étape d'ajustement de concentration est optionnelle dans le cas de concentrat de déchets radioactifs initiaux très peu concentré. Mais, il est impératif de dissoudre tous les borates et tous les sels alcalins. Ainsi, afin de limiter les volumes de solution à filtrer, on peu décider d'ajuster le pH et/ou de chauffer le concentrat.

Il est préférable de garder une limite de sécurité en-dessous de la limite de solubilité, surtout lorsque la solution est chauffée, afin d'éviter le colmatage du filtre utilisé lors de l'étape de filtration par la précipitation de cristaux de sels de borates et de sels alcalins.

Le ou les surnageants extraits lors d'un cycle ultérieur suivant le premier cycle seront avantageusement utilisés par cette étape d'ajustement de concentration. Mais, si le taux d'extraction désiré est faible, le ou les surnageants peuvent rejoindre les déchets radioactifs prétraités après évaporation.

Même si l'ajustement de concentration nécessite une extraction d'eau, par exemple par évaporation, il sera avantageux d'ajouter un surnageant d'un cycle ultérieur : il faudra alors extraire plus d'eau mais on minimisera la proportion de borates dans les déchets radioactifs prétraités.

Lorsque l'on travaille à un pH égal à 9,2 (pH2) dans la zone de solubilité du borax, la limite de solubilité est de 25 g/L de Na₂B₄O₇ à température ambiante et de 400 g/L à 100°C. Il ne faut donc pas dépasser avant filtration des concentrations maximales de 20 g/L à température ambiante et de 300 g/L à 100°C. Les limites de solubilité sont plus élevées à pH1 ou pH3.

Lors de l'étape de dissolution des cycles suivant le premier cycle ou lors de l'étape de concentration du premier cycle, la limite de solubilité des borates peut être augmentée en ajustant le pH par ajout d'acide et/ou de base de manière à correspondre à la forme métaborate (BO₂⁻) ou bien pentaborate (B₅O₈⁻) et hydrogénotétraborate (HB₄O₇⁻), de solubilités maximales.

Lors du ou des étapes de précipitation des cycles suivant le premier cycle et/ou du premier cycle de concentration/précipitation, la limite de solubilité des borax peut être diminuée en ajustant le pH par ajout d'acide et/ou de base de manière à correspondre à la forme tétraborate (B₄O₇²⁻), de solubilité minimale.

Les parties surnageantes retirées lors d'un cycle d'ordre élevé peuvent être recyclées dans la ou les étapes de dissolution d'un ou de plusieurs cycles précédents d'ordre plus faible ou dans l'étape d'ajustement de concentration. En revanche, l'étape de dissolution du dernier cycle dissolution/précipitation doit être réalisée avec de l'eau pure ou eau distillée et non avec un surnageant.

Les boues et la partie surnageant retirée lors de l'étape de précipitation du premier cycle font partie des déchets radioactifs prétraités.

L'étape de prétraitement peut comprendre une étape d'ajustement du pH des déchets radioactifs entre 8,5 et 9,7, de préférence entre 9 et 9,5, de préférence encore à 9,2 par ajout d'acide et/ou de base précédant les cycles de l'étape de prétraitement. Cette étape permet d'ajuster le pH pour des déchets radioactifs initiaux qui n'auraient pas une valeur de pH acceptable.

Le choix de ne pas faire d'ajustement de pH peut être reconsidéré selon les cas.

Dans le cas où le facteur de contamination souhaité est élevé, le nombre de cycles dissolution/précipitation doit être élevé. Par exemple, le nombre de cycles peut être égal à trois ou plus.

La soude permettant d'augmenter la valeur de pH peut être remplacée par n'importe quelle base. De la même manière, l'acide nitrique, utilisé pour baisser la valeur de pH, peut être remplacé par n'importe quel acide.

L'ajout de soude, comme celui de la plupart des bases, se traduit par un ajout de matière après calcination des déchets radioactifs prétraités alors que l'ajout d'acide nitrique, comme celui d'acides organiques, ne génère que des émanations gazeuses.

Il est possible de remplacer la soude par de l'ammoniaque. Mais, le déchet radioactif contient souvent des nitrates. On fabrique alors du nitrate d'ammonium qui est explosif. Il est donc difficile de faire des ajustements de pH sans ajouter de matière.

Le remplacement de la soude par la potasse ne permet pas d'ajouter moins de matière, mais le nitrate de potassium est moins soluble que le nitrate de sodium et donc s'extrait mieux.

Ainsi, dans certaines conditions, lors des étapes de refroidissement, le pH du concentrat peut être ajusté par ajout d'acide tel que l'acide nitrique et/ou de base tel que la potasse pour que le concentrat de déchets soit au minimum de solubilité du tétraborate (B₄O₇²⁻).

De même, lors des étapes où un précipité est obtenu, le pH du concentrat est ajusté par ajout de base tel que la potasse et/ou d'acide tel que l'acide nitrique pour que le concentrat soit au maximum de solubilité correspondant au métaborate (BO₂⁻) ou bien au maximum de solubilité correspondant au pentaborate (B₅O₈⁻) et à l'hydrogénotétraborate (HB₄O₇⁻).

Ainsi, suite au procédé utilisé pour l'étape de prétraitement, on obtient, d'une part du borax purifié, et d'autre part, des déchets radioactifs prétraités comprenant le surnageant le plus actif extrait lors du premier cycle et les boues extraites des déchets radioactifs initiaux, ces deux composants étant mélangés et séchés par évaporation. La composition des déchets radioactifs prétraités, en l'absence d'ajustement de pH, se déduit de la composition décrite dans le tableau 1 en enlevant 90% du borax Na₂B₄O₇(H₂O)₁₀.

Lorsque les déchets radioactifs initiaux sont de la soude issue de l'inertage du sodium radioactif, l'étape de prétraitement correspond à une étape d'évaporation de la soude pour en extraire la soude séchée.

Un des objectifs de l'étape de prétraitement est d'ajuster la proportion d'anhydride borique par rapport aux oxydes alcalins à un rapport molaire compris entre 0,15 et 1, de préférence 2/3 de mole de B₂O₃ par mole d'oxyde alcalin, soit un rapport compris dans une plage entre 0,15 et 1.

Lorsque l'on part de concentrat d'évaporateur, l'étape de prétraitement permet d'extraire de l'anhydride borique, sous forme de borax. Lorsque l'on part de soude issue de l'inertage du sodium radioactif, l'étape de prétraitement permet d'ajouter de l'anhydride borique.

Ces déchets radioactifs prétraités subissent alors une étape de mélange de déchets radioactifs prétraités avec l'ajout de différents oxydes. Ces différents oxydes sont des composés aptes à vitrifier ou céramiser les déchets radioactifs prétraités.

Dans cette étape, il est ajouté :
- de 0,7 mol à 1,5 mol de silice (SiO₂) pour 1 mol d'oxyde alcalin contenu dans les déchets radioactifs prétraités et de 0,8 mol à 2 mol de mélange d'un ou plusieurs oxydes pour 1 mol d'oxyde alcalin contenu dans les déchets radioactifs prétraités pour former la base de la matrice ;
- de 0,05 mol à 0,1 mol d'oxyde stabilisant pour 1 mol d'oxyde alcalin contenu dans les déchets radioactifs prétraités afin d'obtenir un produit final résistant à l'eau ;
- d'éventuellement de fondants favorisant la fusion.

L'oxyde stabilisant peut être, par exemple, de l'oxyde de zirconium (ZrO₂) ou de l'oxyde de titane (TiO₂) ou de l'oxyde d'étain (SnO₂) ou de l'oxyde de Cérium (CeO₂). Il s'agit d'oxydes très peu solubles qui renforcent la résistance à l'eau de la matrice de base. En effet, la matrice de base résiste à l'eau mais non totalement. Lors de sa dissolution, une couche d'oxyde stabilisant se constitue en surface de la matrice. Cette couche protège de l'eau le reste de la matrice.

Les oxydes pour former la base de borosilicate d'alcalins peuvent être, par exemple, parmi les composés suivants : l'alumine (Al₂O₃), la chaux (CaO), l'oxyde de magnésium (MgO), l'oxyde de baryum (BaO) ou l'oxyde de zinc (ZnO). Le but de ces oxydes est de remplacer une partie de la silice pour obtenir une matrice incorporant des els alcalins en proportion plus importante que dans le verre borosilicate, tout en aboutissant à un produit final non soluble.

Les fondants peuvent être, par exemple, du carbonate de lithium (Li₂CO₃) ou de la fluorine (CaF₂).

Dans ce mélange d'oxydes, il est également possible d'ajouter un supplément de ZnO de manière à atteindre au total une quantité d'au moins 3,5 mol pour 1 mol de Cl⁻ et 7 mol pour 1 mol de SO₄²⁻ contenus dans les déchets radioactifs prétraités pour éviter la démixtion d'une phase K, dont nous parlerons plus loin dans la description, essentiellement composée de sulfate et chlorure de potassium.

Dans ce mélange d'oxydes, il est aussi possible d'ajouter au moins 0,4 mol de Al₂O₃ et d'au moins 0,8 mol de ZnO pour 1 mol d'oxyde alcalin pour obtenir une matrice d'immobilisation en roche synthétique dévitrifiée. L'alumine et le ZnO sont ajoutés au mélange d'oxydes de telle manière que le mélange d'oxydes reste dans l'intervalle de 0,8 mol à 2 mol de mélange d'oxydes pour 1 mol d'oxyde alcalin.

Le mélange obtenu suite à l'étape de mélange subit l'étape de fusion à une température inférieure à 1050°C pour obtenir une masse en fusion. Cette étape peut être réalisée dans un creuset (17) agité soumis à des micro-ondes (170).

La limite de température à 1050°C est imposée par le caractère volatile des alcalins qui doivent être conditionnés. Les sels et les oxydes de sodium, de potassium et de lithium constituent une part significative du déchet à conditionner et sont volatiles. Les sels et les oxydes de césium comprennent une part de la radioactivité du déchet et sont volatiles également.

Dépasser la température de 1050°C, ainsi que l'ont montre nos essais, conduirait à produire des fumées contenant une grande quantité de matière et une part significative de la radioactivité. Les deux effets sont néfastes et compliquent considérablement le traitement des fumées.

De préférence, la température de fusion est comprise entre 600°C et 1000°C. De préférence, la température de fusion est de 950°C.

Il doit également être compris que les ajouts d'oxydes peuvent être remplacés par un ajout de « précurseurs » qui produisent après calcination ces oxydes ajoutés, au cas particulier près du carbonate de baryum (BaCO₃) qui ne se décomposerait pas aux températures utilisés, inférieure à 1050°C.

Les quantités d'oxydes ajoutés ci-dessus sont définies pour un déchet ne comportant aucun des oxydes cités ou de leurs précurseurs. Il se peut que certains déchets contiennent au moins un des oxydes. Dans ce cas, la composition des ajouts doit être réduite d'autant.

Dans la suite de la description, nous décrivons précisément les essais qui ont été réalisés.

Nous n'avons pris en compte que les espèces majeures sodium (Na), potassium (K) et bore (B), et uniquement sous forme d'oxyde anhydre (Na₂O, K₂O, B₂O₃), même si une partie du potassium est initialement sous forme de chlorure et de sulfate. Cette simplification est limitée à la description des compositions, dans la fabrication des mélanges, il est utilisé les bons composés (chlorures et sulfates) et ajouté les espèces mineures (nitrates métalliques, EDTA).

Selon cette simplification, la composition molaire du déchet radioactif initial s'écrit (Na₂O)₁₁.(K₂O)₂.(B₂O₃)₂₂, et, après extraction de 90,9% du borax, valeur proche de 90%, choisie parce que la stoechiométrie du résidu s'écrit avec des petits nombres entiers, la composition du résidu s'écrit Na₂O.(K₂O)₂.(B₂O₃)₂.

Nous définirons les additifs dans la suite de la description par le nombre de mole de chaque espèce ajoutée à ces formules de base.

Nous avons dans un premier temps assimilé mole pour mole le potassium au sodium, et tenté d'appliquer le brevet français FR 2 550 654, cité plus haut, par l'ajout de ZnO dans les déchets radioactifs sans extraction de borates pour stabiliser le produit final. Ce brevet ne s'applique que pour un rapport molaire Na₂O/B₂O₃ inférieur à 0,6. Or, le rapport molaire Na₂O/B₂O₃ avec le potassium assimilé à au sodium vaut déjà 0,6 pour le déchet radioactif initial.

Nous avons testé les compositions suivantes :
(1) (Na₂O)₁₁.(K₂O)₂.(B₂O₃)₂₂ + 4ZnO (10% molaire de ZnO dans le produit final)
(2) (Na₂O)₁₁.(K₂O)₂.(B₂O₃)₂₂ + 15ZnO (30% molaire de ZnO dans le produit final).
(3) (Na₂O)₁₁.(K₂O)₂.(B₂O₃)₂₂ + 24ZnO (40% molaire de ZnO dans le produit final).

Plus on ajoute de ZnO, moins le produit final est soluble. La composition (1) se dissout complètement dans l'eau en 140 h. La composition (3) perd 7% de masse en 6 mois. De plus, la composition (3) ne fond pas complètement aux températures testées, un lit de particules infondues reste au fond du creuset.

Nous avons également testé l'ajout de ZnO sur le résidu après extraction des borates aux déchets radioactifs prétraités (Na₂O.(K₂O)₂.(B₂O₃)₂). Il a été constaté que les échantillons restent infondus jusqu'à 1050°C.

En outre, l'extraction de 90% de borates augmente le rapport molaire à 1,5. Le procédé enseigné par le brevet FR 2 550 654 ne peut donc pas être appliqué avec les rapports molaires obtenus par le procédé selon l'invention.

Le brevet FR 2 550 654 n'est applicable ni lorsque l'on substitue le potassium au sodium, ni lorsque l'on dépasse le rapport molaire Na₂O/B₂O₃ de 0,6.

La suite de la description expose les étapes retenues pour l'invention lors des essais.

Le verre de borosilicate ou « *Pyrex* », très peu soluble, a une composition s'approchant de celle des déchets radioactifs prétraités. Ses composants majeurs sont les même à la silice (SiO₂) près.

Pour approcher la composition standard du verre de borosilicate, il faudrait ajouter 15 moles de silice aux déchets radioactifs prétraités pour obtenir un composé de formule Na₂O.(K₂O)₂.(B₂O₃)₂.(SiO₂)₁₅.

Le tableau 2 représente la composition du verre de borosilicate et la composition des déchets radioactifs prétraités auquel de la silice a été ajoutée.

À part un déséquilibre du rapport Na₂O/K₂O, les deux compositions sont très voisines.

Mais, l'ajout de 15 moles de silice est trop important. De plus, la température de fusion d'un tel composé est trop élevée. En effet, l'ajout de 6 mol de silice amène déjà à une température de fusion à 1010°C du composé Na₂O.(K₂O)₂.(B₂O₃)₂.(SiO₂)₆.

Ce dernier composé Na₂O.(K₂O)₂.(B₂O₃)₂.(SiO₂)₆, qui reste soluble, est utilisé dans la suite des étapes comme base de borosilicate d'alcalins.

À cette base de borosilicate, des oxydes stabilisant tels que l'oxyde de zirconium (ZrO₂) et l'oxyde de titane (TiO₂) ont été ajoutés.

Ainsi, au début du processus de lixiviation, la matrice borosilicatée obtenue se dissout légèrement, laissant en surface les oxydes insolubles tels que ZrO₂ qui bloquent la dissolution. Cette faible lixiviation initiale du processus est admise dans les spécifications de l'ANDRA (Agence nationale pour la gestion des déchets radioactifs) et dans les normes internationales.

De plus, pour remplacer une partie de la silice nécessaire normalement pour obtenir le verre de borosilicate, d'autres oxydes tels que, par exemple, l'alumine (Al₂O₃), la chaux (CaO), l'oxyde de magnésium (MgO), l'oxyde de baryum (BaO) ou l'oxyde de zinc (ZnO) sont ajoutés en remplacement de la silice. Ce remplacement permet de garder une fusibilité suffisante malgré des ajouts relativement importants.

Enfin, pour améliorer encore la fusibilité, des fondants tels que le carbonate de lithium (Li₂CO₃) ou la fluorine (CaF₂) peuvent être ajoutés en petites quantités correspondant à 1% à 2% du total des déchets radioactifs prétraités et des ajouts.

Ainsi, de 0,7 mol à 1,5 mol de silice est ajoutée pour 1 mol d'oxyde alcalin contenu dans les déchets radioactifs prétraités et de 0,8 mol à 2 mol d'oxyde pour 1 mol d'oxyde alcalin pour former une matrice de base comprenant de 0,7 mol à 1,5 mol de silice et de 0,15 mol à 1 mol d'anhydride borique (B₂O₃) pour 1 mol d'oxyde alcalin.

Les oxydes alcalins sont parmi Na₂O, K₂O, Li₂O.

En outre, de 0,05 mol à 0,1 mol d'oxyde stabilisant est ajoutée pour 1 mol d'oxyde alcalin afin d'obtenir un produit final résistant à l'eau.

La composition suivante est un exemple de composition d'ajout pour 1 mol de déchets radioactifs prétraités (Na₂O.(K₂O)₂.(B₂O₃)₂) :
- 3 mol de SiO₂,
- 1/2 mol de Al₂O₃,
- 1 mol de CaO,
- 1/2 mol de MgO,
- 1/2 mol de BaO,
- 1 mol de ZnO,
- 1/6 mol de ZrO₂.

Un exemple de composition du produit fini après l'étape de calcination est représenté dans le tableau 3 en pourcentage massique.

Na₂O, K₂O, B₂O₃, Autres et une partie de CaO et MgO proviennent des déchets radioactifs prétraités.

L'ajout représente 105% de la masse de déchet calciné ou 106% de la masse de Na₂O.(K₂O)₂.(B₂O₃)₂ pur.

Compte tenu d'une densité de 2,2, 1 L de produit final contient 1070 g d'oxydes Na₂O, K₂O et B₂O ; ce qui est significativement mieux que ce qu'annoncent les brevets EP 0 319 398 avec 90 g), EP 0 929 079 avec 630 g, FR 2 485 243 avec 600 g, malgré la présence de potassium, et une plus forte teneur en alcalins.

Seul le brevet FR 2 550 654 annonce une meilleure performance (2200 g), mais pour les conditions extrêmes les plus favorables où le rapport Na₂O/B₂O₃ est le plus élevé et l'ajout le plus faible, il n'est pas du tout sûr que la matrice obtenue soit effectivement insoluble. En outre, le rapport Na₂O/B₂O₃ le plus élevé est égal à 0,6, ce qui reste très inférieur à celui obtenu selon l'invention à 1,5.

Lorsque l'on considère que les borates extraits, à raison de 90%, produisent soit un déchet bien moins difficile et moins onéreux à traiter, soit une matière recyclable, il faut prendre en compte les quantités d'oxydes avant prétraitement. Dans ce cas, on peut considérer que 1 L de produit final résulte de 6600 g de (Na₂O)₁₁.(K₂O)₂.(B₂O₃)₂₂. Cette performance est trois fois supérieure à celle du brevet FR 2 550 654.

Si le déchet à immobiliser est constitué uniquement de sels alcalins, le taux d'incorporation est de 688 g de Na₂O+K₂O par litre de produit final, ce qui est très légèrement supérieur à la performance extrême du brevet FR 2 550 654 où le rapport Na₂O/B₂O₃ est le plus élevé, l'ajout le plus faible.

Il s'est avéré que la présence de sulfates et de chlorure dans le déchet initial génère, lors de la fusion, une « phase K ». Nous avons désigné ainsi cette phase K, avec K comme potassium, parce qu'elle renferme du potassium, préférentiellement au sodium, en tant que contre-ion des sulfates et des chlorures.

Il s'agit d'une phase blanchâtre distincte de la phase principale, dont elle se sépare lors de la fusion.

Contrairement aux attentes, chlorures et sulfates ne se décomposent pas en oxydes lors de la calcination.

Cette phase K est très soluble, et est susceptible de contenir du césium radioactif, de comportement chimique proche du potassium, lequel pourrait être libéré du bloc de déchets lors d'une lixiviation.

Notons toutefois que la présence de cette phase K n'est pas systématique. Sur les centrales nucléaires EDF, par exemple, l'introduction de produits contenant des composés du soufre ou d'halogènes est rigoureusement interdite, ce qui exclut la présence de sulfates et de chlorures dans les déchets.

Afin de pallier à ce défaut, nous avons vérifié qu'une fusion dans un creuset agité disperse la phase K au sein de la phase principale, la protégeant ainsi de la lixiviation.

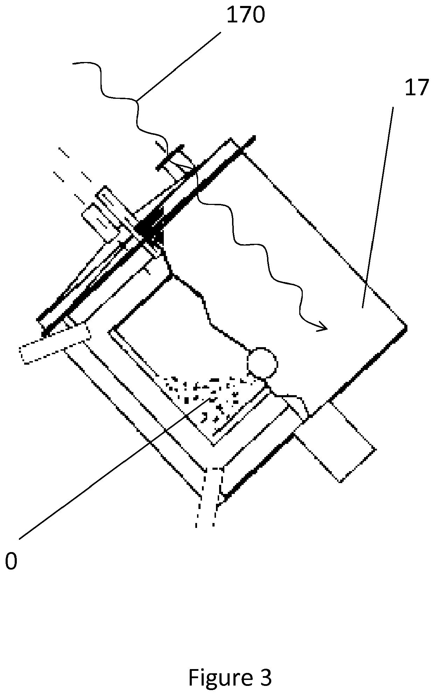

La technologie de four agité est à base de micro-ondes (170) appliquée dans un creuset (17) tournant comme représenté sur la figure 3.

Le chauffage micro-onde présente l'avantage d'injecter la chaleur directement dans le produit, ce qui permet une chauffe rapide, de 30 min à 1 h, contrairement à un four électrique classique procédant essentiellement par rayonnement infrarouge.

Il est aussi possible d'éviter chimiquement la formation d'une phase K distinct de la phase principale, avec un supplément de ZnO de manière à atteindre au total au moins 2,5 mol par mole de Na₂O.(K₂O)₂.(B₂O₃)₂, soit 3,5 mol de ZnO par mole équivalent de Cl⁻ et SO₄²⁻.

Un exemple de composition du produit fini après l'étape de fusion sans phase K est représenté dans le tableau 4 en pourcentage massique.

Na₂O, K₂O, B₂O₃, Autres et une partie de CaO et MgO proviennent des déchets radioactifs prétraités.

L'ajout représente 136 % de la masse de déchet calciné ou 137 % de la masse de Na₂O.(K₂O)₂.(B₂O₃)₂ pur.

Compte tenu d'une densité de 2,2, 1 L de produit final contient 928 g d'oxydes Na₂O, K₂O et B₂O, ce qui est 13 % moins bon que la composition indiquée dans le tableau 3, mais encore supérieur à l'état de l'art.

L'étape suivant l'étape de mélange est suivie d'une étape de calcination puis de fusion du mélange à une température inférieure à 1050°C pour obtenir une masse en fusion.

La procédure de chauffe pour cette étape est délicate, parce que de multiples émanations gazeuses se produisent pendant la chauffe comme l'évaporation de l'eau, la combustion des produits organiques, la dissociation des nitrates puis des carbonates.

Ces émanations gazeuses produisent un phénomène de moussage, susceptible, s'il est mal maîtrisé, de faire déborder le produit du creuset, et/ou de produire un verre poreux, donc plus volumineux que nécessaire pour une quantité de déchets donnée.

Plusieurs méthodes sont envisageables pour éviter, et en tous les cas, limiter ce phénomène de moussage.

Une méthode met en oeuvre une montée en température par paliers entre 550°C et 800°C pendant une durée comprise entre 2 h et 5 h.

Lors des essais laboratoires effectués avec des creusets statiques, nous avons défini des paliers de température destinés à gérer correctement le moussage : à 650°C pendant 1,5 h ; à 725°C pendant 1 h et à 750°C pendant 0,5 h. La vitesse de montée en température hors paliers était de 100°C/h.

Une autre méthode peut être utilisée quand le four peut être agité pendant la fusion, ce qui permet, entre autres, le chauffage par micro-ondes. L'agitation de la matière, par exemple par rotation, favorise l'échappement des gaz. Il reste néanmoins préférable d'observer un palier d'environ 30 min vers 650°C.

Une autre méthode consiste en la fusion préalable d'une petite quantité de matière, suivi d'un ajout continu de matière crue jusqu'à obtenir la quantité voulue dans la fournée qui peut être de 200 L. Le dégagement gazeux est ainsi continu pendant toute la durée de la chauffe, ce qui limite considérablement le moussage.

Jusqu'à ce niveau de la description, nous nous sommes préoccupés à produire une matrice insoluble, sans cibler une forme particulière telle que le cristal (roche synthétique) ou verre.

De fait, la forme obtenue est un verre. Dans certains cas, cette forme convient, mais dans d'autres, il faudra plutôt viser une forme de roche synthétique.

En effet, lors de leur refroidissement les gros blocs de verre éclatent en général, sous l'effet des contraintes thermiques. Cela a pour effet d'augmenter la surface d'échange, et donc de favoriser la lixiviation.

Les spécifications d'ANDRA pour les déchets FA et MA imposent d'ailleurs de livrer des blocs monolithiques pour le stockage final.

Lors du refroidissement d'une roche synthétique, les contraintes thermiques apparaissant sont plutôt relâchées par réorganisation des cristaux avec formation de retassures que par fissuration du bloc.

Nous avons donc recherché des compositions conduisant à une roche synthétique. Pour cela, les oxydes de zinc (ZnO) et d'aluminium (Al₂O₃) ont été ajoutés en quantité supérieure à ce qui est nécessaire pour obtenir un verre non soluble.

Un exemple de composition du produit fini dévitrifié après fusion et refroidissement est représenté dans le tableau 5 en pourcentage massique.

Na₂O, K₂O, B₂O₃, Autres et une partie de CaO et MgO proviennent des déchets radioactifs prétraités.

Le fondant peut être Li₂CO₃ qui devient Li₂O après calcination ou le fondant peut être CaF₂ ou un mélange des deux.

L'ajout représente 171% de la masse de déchet calciné ou 172% de la masse de Na₂O.(K₂O)₂.(B₂O₃)₂ pur.

Compte tenu d'une densité de 2,2, 1 L de produit final contient 808 g d'oxydes Na₂O, K₂O et B₂O, ce qui est 25% moins bon que la composition indiquée dans le tableau 3, mais encore supérieur à l'état de l'art.

La proportion en oxyde de zinc étant suffisante, la phase K ne se démixe pas, même en l'absence d'agitation lors de la chauffe.

L'étape suivante est une étape de refroidissement de la masse en fusion pour obtenir une matrice d'immobilisation de déchets radioactifs.

La matrice d'immobilisation obtenue à partir du procédé peut comprendre au moins une base de borosilicate d'alcalins avec au moins de 0,7 mol à 1,5 mol de silice et 0,15 mol à 1 mol d'anhydride borique (B₂O₃) pour 1 mol d'oxyde alcalin, au moins un oxyde stabilisant à une quantité de 0,05 mol à 0,1 mol pour 1 mol d'oxyde alcalin, au moins mélange complémentaire à une quantité de 0,8 mol à 2 mol pour une mole d'oxyde alcalin comprenant au moins un oxyde métallique, le mélange participant à la constitution de la matrice et permettant d'obtenir à la fois une fusion plus aisée et une meilleure tenue à l'eau.

La matrice peut comprendre en outre 1 % à 3% de fondants par rapport à la masse totale de la matrice sans les fondants.

Elle peut comprendre également une quantité supplémentaire de ZnO de manière à atteindre au total une proportion d'au moins 3,5 mol pour 1 mol de Cl⁻ et 7 mol pour 1 mol de SO₄²⁻.

Elle peut comprendre en outre une quantité supplémentaire de ZnO et Al₂O₃ de manière à atteindre au total une proportion respective d'au moins 0,8 mol et 0,4 mol pour 1 mol d'oxyde alcalin.

Les deux exemples qui suivent sont des exemples de traitement de concentrat d'évaporateur adaptés aux normes mondiales pour l'exemple 1 et plus spécifiquement à la France pour l'exemple 2.

### Exemple 1

Le déchet radioactif initial est un concentrat de teneur en matière sèche de 50 g/L dont un exemple de composition est décrit dans le tableau 1.

Les seuils de libération sont généralement compris entre 0,1 Bq/g et 1 Bq/g pour des radioéléments principaux tels que ¹³⁷Cs, ¹³⁴Cs et ⁶⁰Co.

Nous allons donc extraire les borates avec pour objectif de générer un déchet non radioactif. En partant d'un déchet initial avec une activité de l'extrait sec de l'ordre de 10 000 Bq/g, il faut atteindre un facteur de décontamination élevé de l'ordre de 30 000.

Pour cela, il faut extraire les borates en trois cycles au moins en portant une attention particulière à la filtration. Une filtration tangentielle avec un seuil de coupure de 0,1 µm est adaptée. Il est préférable de répéter la filtration après chaque dissolution. L'extraction de borates de cet exemple comprend ainsi un premier cycle de concentration/précipitation et deux cycles de dissolution/précipitation.

Le pH naturel des déchets radioactifs provenant d'évaporateur est en général autour de 9,2, et ciblé sur la valeur pH2 de la courbe de la figure 1, et correspond à la présence de borax.

Le cas échéant, on ajustera le pH à la valeur de pH2.

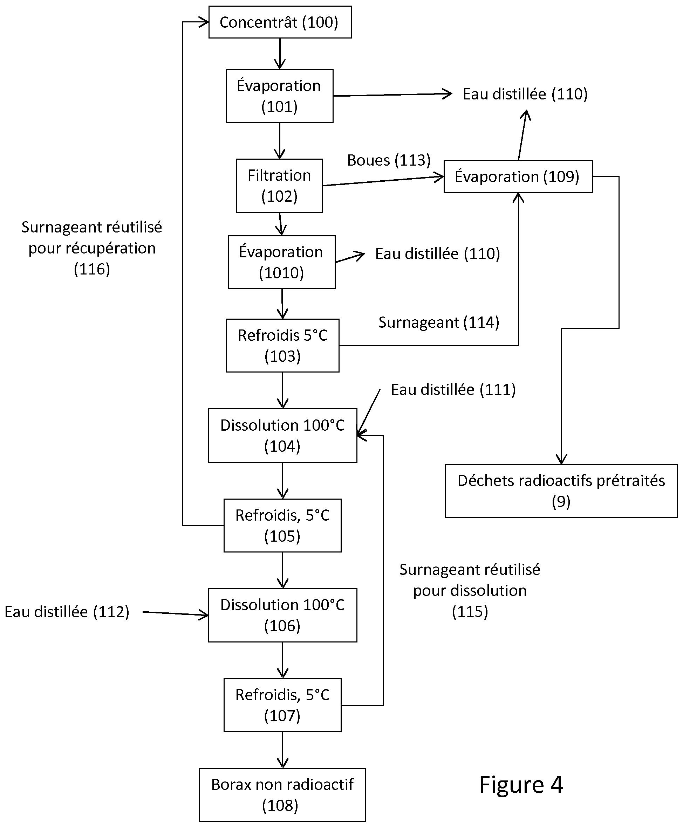

La figure 4 représente la séquence de l'opération d'extraction du borax (108).

Une première étape (101) d'évaporation du concentrat de déchets radioactifs (100) permet d'augmenter la concentration du concentrat à 300 g/L et de récupérer de l'eau (110).

Une étape (102) de filtration du concentrat permet de retirer des boues (113) du concentrat. Les boues (113) sont ensuite évaporées (109) pour récupérer de l'eau (110) et faire partie du mélange de déchets radioactifs prétraités (9).

Une deuxième étape (1010) d'évaporation du concentrat de déchets radioactifs permet augmenter la concentration du concentrat à 400 g/L et récupérer de l'eau (110).

Une première étape (103) de refroidissement du concentrat à 5°C permet d'obtenir un précipité de borax et un surnageant (114) qui est retiré Ce surnageant (114) est mélangée aux déchets radioactifs prétraités (9) après avoir été évaporés (109) pour récupérer de l'eau distillée (110).

Une première étape (104) de dissolution à 100°C du borax précipité à la première étape (103) de refroidissement par ajout d'eau (111) et de surnageant (115) provenant d'un déchet subissant un cycle ultérieur permet d'obtenir un concentrat à 400 g/L.

Une deuxième étape (105) de refroidissement du concentrat à 5°C permet d'obtenir une solution avec un précipité et un surnageant (116) qui est retiré Ce surnageant (116) peut être mélangé à un concentrat de déchets radioactifs subissant la première étape (101) d'évaporation.

Une deuxième étape (106) de dissolution à 100°C du borax précipité à la deuxième étape (105) de refroidissement par ajout d'eau (112) permet d'obtenir un concentrat à 400 g/L.

La deuxième étape (106) de chauffage de dissolution est suivie d'une troisième étape (107) de refroidissement à 5°C du concentrat pour obtenir un précipité qui est retiré pour obtenir du borax (108) non radioactif.

Le surnageant (115) retiré lors de la troisième étape (107) de refroidissement peut être mélangé à un concentrat de déchets radioactifs subissant la première étape (104) de chauffage du concentrat à 100°C et de dissolution du concentrat par ajout d'eau.

On obtient ainsi au moins du borax (108) non radioactif et des déchets radioactifs prétraités (9).

Ce procédé d'extraction n'impose pas un équipement avec trois cuves où sont réalisées les étapes de refroidissement et de précipitation, deux cuves où sont réalisées les étapes de chauffage et de dissolution. En effet, une seule cuve de refroidissement/précipitation et une seule cuve de chauffage/dissolution sont suffisantes dans le cadre d'une utilisation séquentielle.

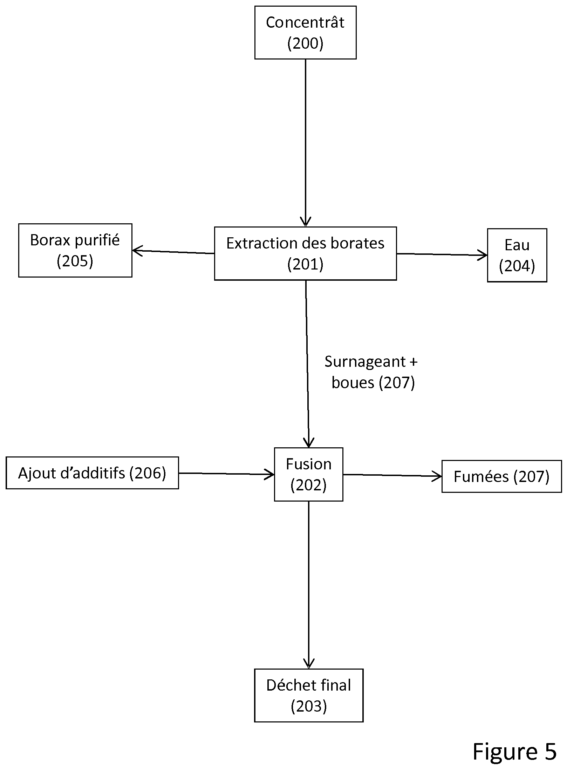

Ce procédé d'extraction des borax s'insère dans le schéma du procédé global d'immobilisation comme représenté dans la figure 5. Le borax obtenu dans cet exemple d'extraction permet d'obtenir du borax purifié TFA ou non radioactif selon le nombre de cycles d'extraction de borax.

À partir d'un concentrat de déchets radioactifs initiaux (200) à une concentration de 50 g/L, on extrait (201) les borates sous forme de borax non radioactif (205) et de l'eau (204). Le surnageant et les boues (207) sont calcinés et fusionnés (202) après l'ajout (206) d'additifs pour produire de la fumée (207) et le déchet final (203) sous forme de bloc solide résistant à l'eau.

On coule alors ce déchet directement dans des fûts 200 L, par exemple. Souvent, selon les spécifications déchets et habitudes locales, ce fût sera lui-même conditionné dans un conteneur béton durable, et les spécifications sur la durabilité du déchet dans le fût, notamment lixiviation et aspect monolithique, ne sont pas alors trop sévères et s'accommodent d'une matrice verre.

Un fût de 200 L permet de conditionner 26,3 m³ de concentrat initial, et ce conditionnement produit 1,09 t de borax non radioactif et 25,7 m³ d'eau distillée.

L'activité résiduelle dans le borax est inférieure à 1 Bq/g.

### Exemple 2

Le déchet radioactif initial (300) est un concentrat de teneur en matière sèche de 50 g/L dont un exemple de composition est décrit dans le tableau 1.

L'objectif est d'évacuer le borax extrait en tant que déchet radioactif TFA, c'est-à-dire avec une activité résiduelle inférieure à 10 Bq/g pour les radioéléments principaux tels que ¹³⁷Cs, ¹³⁴Cs et ⁶⁰Co.

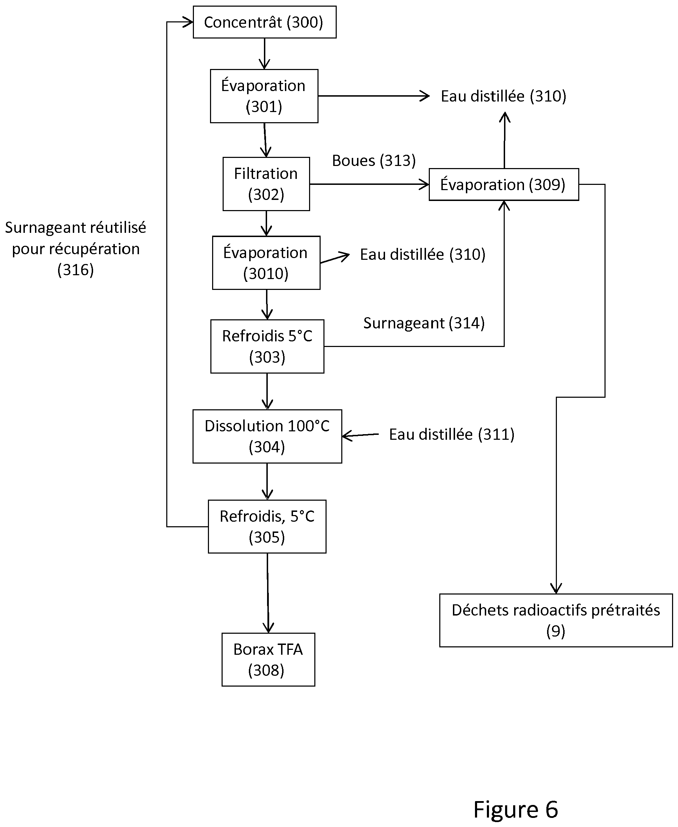

Ainsi, l'extraction des borates peut laisser une activité résiduelle dans le borax qui est alors très faiblement radioactif. Deux cycles peuvent donc être suffisants comme représenté sur la figure 6 : un premier cycle de concentration/précipitation et un cycle de dissolution/précipitation.

Une première étape (301) d'évaporation du concentrat de déchets radioactifs permet d'augmenter la concentration du concentrat à 300 g/L et de récupérer de l'eau (310).

Une étape (302) de filtration du concentrat permet de retirer des boues (313) du concentrat. Les boues (313) sont ensuite évaporées (309) pour récupérer de l'eau (310) et faire partie du mélange de déchets radioactifs prétraités (9),

Une deuxième étape (3010) d'évaporation du concentrat de déchets radioactifs permet augmenter la concentration du concentrat à 400 g/L et récupérer de l'eau (310).

Une première étape (303) de refroidissement du concentrat à 5°C permet d'obtenir un solution avec un précipité et un surnageant (314) qui est retiré et une étape (304) de dissolution du borax à 100°C et de dissolution du concentrat par ajout d'eau (311) pour atteindre une concentration de 400 g/L dans la solution.

Le surnageant (314) retiré lors de la première étape (303) de refroidissement est mélangée aux déchets radioactifs prétraités (9) après avoir été évaporé (309) en récupérant de l'eau (310).

Une deuxième étape (305) de refroidissement du concentrat à 5°C permet d'obtenir un précipité et un surnageant (316) qui est retiré.

Le surnageant (316) retiré lors de la deuxième étape (305) de refroidissement est mélangé à un concentrat de déchets radioactifs (300) subissant la première étape (301) d'évaporation.

On obtient ainsi du borax TFA (308) et des déchets radioactifs prétraités (9).

Selon que l'on veuille obtenir un produit final vitreux ou un produit final cristallisé, le traitement de la matrice d'immobilisation est différent.

Dans le cas d'un produit final vitreux, le déchet suivant l'étape de fusion est coulé dans un bac d'acier à fond plat. Le verre refroidi est récupéré par grattage mécanique. Le produit final se présente donc sous forme de morceaux de verre. Ces morceaux de verre sont alors utilisés comme granulats pour réaliser un béton. Ces granulats occupent environ 70% du volume du béton final. Ce béton est ensuite coulé dans des coques qui peuvent être des conteneurs cylindriques en béton de volume utile de 760 L, qualifiés par l'ANDRA de conteneurs durables. Une coque permet de conditionner 70 m³ de concentrat initial après la production de 2,9 t de borax et 68 m³ d'eau distillée qui peut être utilisée en partie pour la fabrication du béton.

Dans le cas d'un produit final cristallisé, le déchet suivant l'étape de fusion est coulé dans un fût de 200 L par exemple. Selon l'activité dans le déchet final, ce fût est directement acceptable au centre de stockage, ou doit être conditionné dans un conteneur plus grand qui apportera un écran contre l'irradiation.

Ce fût permet de conditionner 20 m³ de concentrat initial après la production de 0,82 t de borax et 19 m³ d'eau distillée.

L'exemple 3 qui suit est un exemple de traitement de soude issue de l'inertage de sodium radioactif.

### Exemple 3

Le déchet initial est de la soude se présentant sous forme d'une solution de soude 10 M.

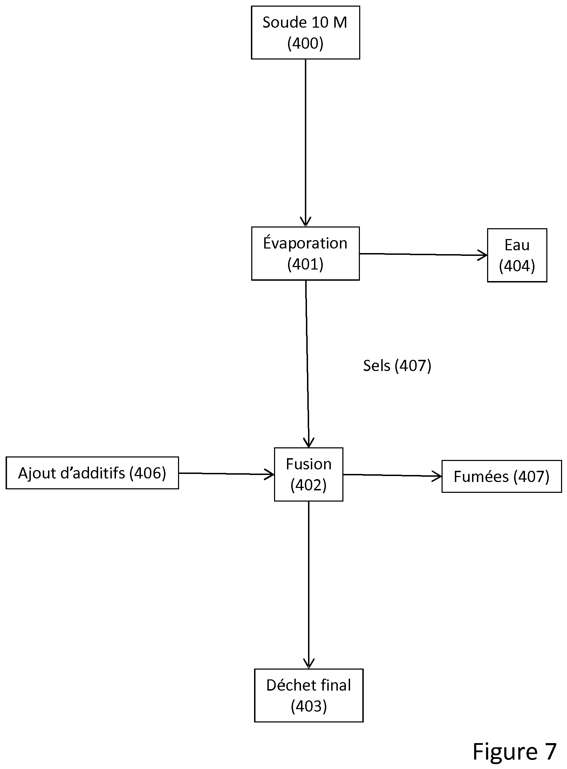

La figure 7 représente les étapes du procédé.

Le concentrat de soude radioactive 10 M initial (400) est évaporé (401) pour extraire l'eau (404) et les sels (407). La suite du procédé est identique au procédé appliqué pour le déchet prétraité issu du concentrat d'évaporateur. Les sels (407) sont également récupérés pour être calcinés et fusionnés (402) après l'ajout (406) d'additifs pour produire de la fumée (407) et le déchet final (403) sous forme de matrice d'immobilisation.

Un exemple de composition du déchet final reprend l'exemple de composition du tableau 3 dans laquelle on remplace les sels et oxydes de potassium par de la soude. Chaque mole de potasse est remplacée par une mole de soude. Cela impose d'ajouter, entre autres, du bore sous forme d'acide borique.

Le déchet final peut être directement coulé dans des fûts, par exemple de 200 L. Selon l'activité du déchet final, le fût est acceptable au centre de stockage ou doit être conditionné dans un conteneur plus grand qui apportera un écran contre l'irradiation.

Chaque litre de déchet final contient 688 g de Na₂O. Un fût de 200 L permet de conditionner 444 L de solution de soude, ce qui correspond à 102 kg de sodium avant inertage.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

**Tableau 1**

| Composé | g/kg |
|---|---|
| Na₂B₄O₇(H₂O)₁₀ | 913,27 |
| Fe(NO₃)₃ | 0,07 |
| Cu(NO₃)₂ | 0,61 |
| Ni(NO₃)₂ | 0,06 |
| Ca(NO₃)₂ | 0,18 |
| Mg(NO₃)₂ | 0,14 |
| Co(NO₃)₂ | 0,04 |
| KNO₃ | 59,26 |
| KCI | 10,60 |
| K₂SO₄ | 12,68 |
| EDTA (C₁₀H₁₆N₂O₈) | 3,10 |

**Tableau 2**

| Composé | %Na₂O | %K₂O | %B₂O₃ | %SiO₂ | %autres |
|---|---|---|---|---|---|
| Na₂O.(K₂O)₂.(B₂O₃)₂.(SiO₂)₁₅ | 4,8 | 14,6 | 10,8 | 69,7 | 0,1 |
| Verre borosilicate standard | 8 | 8 | 10 | 70 | 4 |

**Tableau 3**

| Na₂O | K₂O | B₂O₃ | SiO₂ | Al₂O₃ | CaO |
|---|---|---|---|---|---|
| 7,74 | 23,52 | 17,38 | 22,50 | 6,36 | 3,53 |

| MgO | BaO | ZnO | ZrO₂ | Autres | |
|---|---|---|---|---|---|
| 1,28 | 4,78 | 10,16 | 2,56 | 0,18 | |

**Tableau 4**

| Na2O | K2O | B2O3 | SiO2 | Al2O3 | CaO |
|---|---|---|---|---|---|
| 6,71 | 20,41 | 15,08 | 19,52 | 5,52 | 3,07 |

| MgO | BaO | ZnO | ZrO2 | Autres | |
|---|---|---|---|---|---|
| 1,11 | 4,15 | 22,04 | 2,22 | 0,16 | |

**Tableau 5**

| Na₂O | K₂O | B₂O₃ | SiO₂ | Al₂O₃ | CaO |
|---|---|---|---|---|---|
| 5,84 | 17,75 | 13,12 | 16,98 | 14,41 | 2,67 |

| MgO | BaO | ZnO | ZrO₂ | Fondants | Autres |
|---|---|---|---|---|---|
| 0,97 | 3,61 | 21,09 | 1,93 | 1,50 | 0,14 |

## Revendications

1. Procédé d'immobilisation de déchets radioactifs comprenant au moins des sels alcalins pour obtenir une matrice d'immobilisation, le procédé comprenant au moins :
- une étape (201, 401) de prétraitement de déchets radioactifs initiaux (200, 400) pour obtenir des déchets radioactifs prétraités ;
- une étape (206, 406) de mélange de déchets radioactifs prétraités avec l'ajout de composés aptes à vitrifier ou céramiser les déchets radioactifs prétraités ; de tels composés comprennent au moins :
i. une base de borosilicate d'alcalin avec au moins de 0,7 à 1,5 mol de silice pour une mole d'oxyde alcalin contenu dans les déchets radioactif prétraités,
ii. un oxyde stabilisant et protégeant la matrice de la corrosion à une quantité de 0,05 mol à 0,1 mol pour une mole d'oxyde alcalin contenu dans les déchets radioactif prétraités
iii. un mélange complémentaire d'oxydes à une quantité de 0,8 mol à 2 mol pour une mole d'oxyde alcalin contenu dans les déchets radioactif prétraités,
le mélange comprenant au moins un oxyde métallique et participant à la constitution de la matrice et permettant d'obtenir à la fois une fusion plus aisée et une meilleure tenue à l'eau,
- une étape de calcination puis de fusion (202, 402) du mélange à une température inférieure à 1050°C pour obtenir une masse en fusion ;
- une étape de refroidissement de la masse en fusion pour obtenir (203, 403) une matrice d'immobilisation de déchets radioactifs,
les déchets radioactifs initiaux étant un concentrat d'évaporateur, l'étape de prétraitement comprenant une étape d'extraction de 70% à 90% du borax (Na₂B₄O₇) à partir des déchets radioactifs initiaux, les déchets radioactifs prétraités obtenus ayant un rapport molaire de l'anhydride borique (B₂O₃) par rapport aux oxydes alcalins compris entre 0,15 et 1.

2. Procédé selon la revendication 1, **caractérisé en ce que** l'étape de calcination puis de fusion comprend une étape de montée en température comprenant l'observation de paliers interrompant la montée en température pendant 2 h à 5 h entre 550°C et 800°C.

3. Procédé selon au moins l'une des revendications 1 et 2, **caractérisé en ce que** lors de l'étape de calcination puis de fusion, le mélange subit une agitation.

4. Procédé selon au moins l'une des revendications 1 à 3, **caractérisé en ce que** l'étape de calcination puis de fusion comprend une étape de fusion d'une petite partie du mélange calciné suivie d'une étape d'ajout continu et progressif du mélange cru dans le bain en fusion jusqu'à la quantité de mélange fusionné voulue.

5. Procédé selon au moins une des revendications 1 à 4, **caractérisé en ce que** l'étape de prétraitement comprend au moins :
- une étape d'ajustement de la concentration des déchets radioactifs initiaux par ajout ou extraction d'eau ;
- une étape d'ajustement du pH des déchets radioactifs entre 8,5 et 9,7 par ajout d'acide et/ou de base précédant les cycles de l'étape de prétraitement ;
un premier cycle d'extraction de borax comprenant au moins :
- une étape de filtration des déchets radioactifs initiaux pour retirer des boues ;
- une étape d'ajustement de concentration par évaporation pour atteindre la limite de la solubilité de borax à une température comprise entre 60°C et 100°C,
- une étape de précipitation du borax par refroidissement à une température comprise entre 0°C et 25°C, les boues et la partie surnageante étant retirées pour faire partie des déchets radioactifs prétraités,
des cycles éventuels d'extraction de borax suivant le premier cycle d'extraction de borax comprenant au moins :
- une étape de dissolution du borax obtenu lors de l'étape de précipitation du cycle précédent par ajout d'eau à une température comprise entre 60°C et 100°C,
- une étape de précipitation par refroidissement à une température comprise entre 0°C et 25°C, la partie surnageant obtenue à partir de cette étape étant retirée.

6. Procédé selon la revendication 5, **caractérisé en ce que**, entre l'étape de dissolution et l'étape de précipitation du ou des cycles d'extraction de borax suivant le premier cycle, sont ajoutées :
- une étape de filtration pour retirer des boues,
- une étape de concentration par évaporation pour atteindre la limite de solubilité des borax à une température comprise entre 60°C et 100°C.

7. Procédé selon au moins une des revendications 5 à 6, **caractérisé en ce que**, lors de l'étape de dissolution des cycles suivant le premier cycle ou lors de l'étape d'ajustement de concentration du premier cycle, la limite de solubilité des borates est augmentée en ajustant le pH par ajout d'acide et/ou de base de manière à correspondre à la forme métaborate (BO₂⁻) ou bien pentaborate (B₅O₈⁻) et hydrogénotétraborate (HB₄O₇⁻), de solubilités maximales.

8. Procédé selon au moins une des revendications 5 à 7, **caractérisé en ce que**, lors de l'étape de précipitation d'un ou plusieurs des cycles, la limite de solubilité des borates est diminuée en ajustant le pH par ajout d'acide et/ou de base de manière à correspondre à la forme tétraborate (B₄O₇²⁻), de solubilité minimale.

9. Procédé selon au moins une des revendications 5 à 8, **caractérisé en ce que** les parties surnageantes retirées lors d'un cycle d'ordre élevé sont recyclées dans la ou les étapes de dissolution d'un ou de plusieurs cycles précédents d'ordre plus faible ou dans l'étape d'ajustement de concentration.

10. Matrice d'immobilisation de déchets radioactifs comprenant au moins:
- des sels alcalins de déchets radioactifs prétraités obtenus à partir de déchets radioactifs initiaux (200, 400) ayant subit une étape (201, 401) de prétraitement de déchets,
- une base de borosilicate d'alcalins comprenant au moins de 0,7 mol à 1,5 mol de silice pour une mole d'oxyde alcalin contenu dans les déchets radioactifs prétraités et 0,15 mol à 1 mol d'anhydride borique (B₂O₃) pour une mole d'oxyde alcalin ;
- au moins un oxyde stabilisant et protégeant la matrice de la corrosion à une quantité de 0,05 mol à 0,1 mol pour une mole d'oxyde alcalin contenu dans les déchets radioactifs prétraités ; les déchets radioactifs ayant été prétraités pour ajuster la proportion d'anhydride borique par rapport aux oxydes alcalins à un rapport molaire compris entre 0,15 et 1 ;
la matrice étant **caractérisée en ce qu'**elle comprend
- un mélange complémentaire d'oxydes à une quantité de 0,8 mol à 2 mol pour une mole d'oxyde alcalin comprenant au moins un oxyde métallique, le mélange participant à la constitution de la matrice et permettant d'obtenir à la fois une fusion plus aisée et une meilleure tenue à l'eau.

11. Matrice selon la revendication 10, **caractérisée en ce qu'**elle est obtenue par fusion à une température inférieure à 1000°C d'un mélange des déchets radioactifs et de différents oxydes.

12. Matrice selon au moins l'une des revendications 10 à 11, **caractérisée en ce qu'**elle comprend en outre 1% à 3% de fondants par rapport à la masse totale de la matrice sans les fondants.

13. Matrice selon au moins l'une des revendications 10 à 12, **caractérisée en ce qu'**elle comprend en outre une quantité supplémentaire d'oxyde de zinc (ZnO) de manière à atteindre au total une proportion d'au moins 3,5 mol pour 1 mol de Cl⁻ et 7 mol pour 1 mol de SO₄²⁻ contenus dans les déchets radioactifs prétraités.

14. Matrice selon au moins une des revendications 10 à 13, **caractérisée en ce que** le mélange complémentaire comprend au moins 0,4 mol de Al₂O₃ et au moins 0,8 mol de ZnO pour 1 mol d'oxyde alcalin, aboutissant ainsi à un produit final dévitrifié.

15. Matrice selon au moins une des revendications 10 à 14, **caractérisée en ce que** les oxydes alcalins sont parmi Na₂O, K₂O, Li₂O.

16. Matrice selon au moins une des revendications 10 à 15, **caractérisée en ce que** le mélange comprend un ou plusieurs composés suivants : alumine (Al₂O₃), chaux (CaO), oxyde de magnésium (MgO), oxyde de baryum (BaO) et oxyde de zinc (ZnO).

17. Matrice selon au moins une des revendications 10 à 16, **caractérisée en ce que** le rapport molaire Na₂O/B₂O₃ est égal à 1,5.

## Patentansprüche

1. Verfahren zur Immobilisierung von radioaktiven Abfällen, umfassend mindestens Alkalisalze, um eine Immobilisierungsmatrix zu erhalten, wobei das Verfahren mindestens umfasst:
- einen Vorbehandlungsschritt (201, 401) radioaktiver Ausgangsabfälle (200, 400), um vorbehandelte radioaktive Abfälle zu erhalten,
- einen Mischschritt (206, 406) vorbehandelter radioaktiver Abfälle mit Hinzufügen von Verbindungen, die imstande sind, die vorbehandelten radioaktiven Abfälle zu vitrifizieren oder zu keramisieren, wobei derartige Verbindungen mindestens umfassen:
i. eine Alkalibosilikatbasis mit mindestens 0,7 bis 1,5 mol Siliziumoxid je ein Alkalioxidmol, das in den vorbehandelten radioaktiven Abfällen enthalten ist,
ii. ein Oxid, das die Matrix stabilisiert und vor Korrosion schützt, in einer Menge von 0,05 bis 0,1 mol je ein Alkalioxidmol, das in den vorbehandelten radioaktiven Abfällen enthalten ist,
iii. ein komplementäres Oxidgemisch in einer Menge von 0,8 bis 2 mol je ein Alkalioxidmol, das in den vorbehandelten radioaktiven Abfällen enthalten ist,
wobei das Gemisch mindestens ein Metalloxid umfasst und an der Bildung der Matrix beteiligt ist und erlaubt, gleichzeitig eine problemlosere Fusion und eine bessere Beständigkeit gegenüber Wasser zu erreichen,
- einen Calcinierungsschritt, danach einen Fusionsschritt (202, 402) des Gemischs bei einer Temperatur unter 1050 °C, um eine Masse in Fusion zu erhalten,
- einen Abkühlungsschritt der Masse in Fusion, um (203, 403) eine Immobilisierungsmatrix radioaktiver Abfälle zu erhalten,
wobei die radioaktiven Ausgangsabfälle ein Evaporatorkonzentrat sind, wobei der Vorbehandlungsschritt einen Extraktionsschritt von 70 % bis 90 % des Borax (Na₂B₄O₇) aus den radioaktiven Ausgangsabfällen umfasst, wobei die erhaltenen vorbehandelten radioaktiven Abfälle ein Molverhältnis des Bortrioxids (B₂O₃) im Verhältnis zu den Alkalioxiden zwischen 0,15 und 1 inklusive haben.

2. Verfahren nach Anspruch 1, **dadurch gekennzeichnet, dass** der Calcinierungs- und dann der Fusionsschritt einen Temperatursteigerungsschritt umfasst, umfassend die Beachtung von Stufen, die den Temperaturanstieg während 2 Stunden bis 5 Stunden zwischen 550 °C und 800 °C unterbrechen.

3. Verfahren nach mindestens einem der Ansprüche 1 und 2, **dadurch gekennzeichnet, dass** das Gemisch beim Calcinierungs- und dann Fusionsschritt gerührt wird.

4. Verfahren nach mindestens einem der Ansprüche 1 bis 3, **dadurch gekennzeichnet, dass** der Calcinierungs- und dann Fusionsschritt einen Fusionsschritt eines kleinen Teils des calcinierten Gemischs umfasst, gefolgt von einem Schritt des kontinuierlichen und schrittweisen Hinzufügens des rohen Gemischs in das Fusionsbad bis zur gewollten Fusionsgemischmenge.

5. Verfahren nach mindestens einem der Ansprüche 1 bis 4, **dadurch gekennzeichnet, dass** der Vorbehandlungsschritt mindestens umfasst:
- einen Korrekturschritt der Konzentration der radioaktiven Ausgangsabfälle durch Hinzufügen oder Extrahieren von Wasser,
- einen Korrekturschritt des pH der radioaktiver Abfälle zwischen 8,5 und 9,7 durch Hinzufügen von Säure und/oder von Base vor den Zyklen des Vorbehandlungsschritts,
wobei ein erster Borax-Extraktionszyklus mindestens umfasst:
- einen Filtrationsschritt der radioaktiven Ausgangsabfälle, um Schlämme zu entfernen,
- einen Korrekturschritt der Konzentration durch Verdampfen, um die Grenze der Löslichkeit von Borax zu erreichen bei einer Temperatur zwischen 60 °C und 100 °C inklusive,
- einen Ausfällschritt des Borax durch Abkühlen auf eine Temperatur zwischen 0 °C und 25 °C inklusive, wobei die Schlämme und der Überstandsteil entfernt werden, um Bestandteil der vorbehandelten radioaktiven Abfälle zu werden,
wobei eventuelle Borax-Extraktionszyklen nach dem ersten Borax-Extraktionszyklus mindestens umfassen:
- einen Auflösungsschritt des Borax, erhalten beim Ausfällschritt des vorangehenden Zyklus durch Hinzufügen von Wasser bei einer Temperatur zwischen 60 °C und 100 °C inklusive,
- einen Ausfällschritt durch Abkühlen auf eine Temperatur zwischen 0 °C und 25 °C inklusive, wobei der auf der Basis dieses Schritts erhaltene Überstandsteil entfernt wird.

6. Verfahren nach Anspruch 5, **dadurch gekennzeichnet, dass** zwischen dem Auflösungsschritt und dem Ausfällschritt des oder der Borax-Extraktionszyklen nach dem ersten Zyklus hinzugefügt werden:
- ein Filtrationsschritt, um Schlämme zu entfernen,
- ein Konzentrationsschritt durch Verdampfen, um die Grenze der Löslichkeit der Boraxe zu erreichen bei einer Temperatur zwischen 60 °C und 100 °C inklusive.

7. Verfahren nach mindestens einem der Ansprüche 5 bis 6, **dadurch gekennzeichnet, dass** beim Auflösungsschritt der Zyklen nach dem ersten Zyklus oder beim Konzentrationskorrekturschritt des ersten Zyklus die Grenze der Löslichkeit der Borate erhöht wird durch Korrektur des pH durch Hinzufügen von Säure und/oder von Base derart, dass sie der Metaboratform (BO₂⁻) oder der Pentaboratform (B₅O₈⁻) und Hydrogentetraboratform (HB₄O₇⁻) maximaler Löslichkeiten entspricht.

8. Verfahren nach mindestens einem der Ansprüche 5 bis 7, **dadurch gekennzeichnet, dass** beim Ausfällschritt eines oder mehrerer Zyklen die Grenze der Löslichkeit der Borate verringert wird durch Korrektur des pH durch Hinzufügen von Säure und/oder von Base derart, dass sie der Tetraboratform (B₄O₇²⁻) minimaler Löslichkeit entspricht.

9. Verfahren nach mindestens einem der Ansprüche 5 bis 8, **dadurch gekennzeichnet, dass** die bei einem Zyklus hoher Ordnung entfernten Überstandsteile in dem oder den Auflösungsschritten eines oder mehrerer vorangehender Zyklen niedrigerer Ordnung oder im Konzentrationskorrekturschritt recycelt werden.

10. Matrix zur Immobilisierung radioaktiver Abfälle, umfassend mindestens:
- Alkalisalze vorbehandelter radioaktiver Abfälle, erhalten aus radioaktiven Ausgangsabfällen (200, 400), die einem Abfall-Vorbehandlungsschritt (201, 401) unterzogen wurden,
- eine Alkaliborsilikatbasis, umfassend mindestens 0,7 bis 1,5 mol Siliziumoxid je ein Alkalioxidmol, das in den vorbehandelten radioaktiven Abfällen enthalten ist, und 0,15 bis 1 mol Bortrioxid (B₂O₃) je ein Alkalioxidmol,
- mindestens ein Oxid, das die Matrix stabilisiert und vor Korrosion schützt, in einer Menge von 0,05 bis 0,1 mol je ein Alkalioxidmol, das in den vorbehandelten radioaktiven Abfällen enthalten ist, wobei die radioaktiven Abfälle vorbehandelt wurden, um den Anteil des Bortrioxids im Verhältnis zu den Alkalioxiden auf ein Molverhältnis zwischen 0,15 und 1 zu korrigieren,
wobei die Matrix **dadurch gekennzeichnet ist, dass** sie umfasst:
- ein komplementäres Oxidgemisch in einer Menge von 0,8 bis 2 mol je ein Alkalioxidmol, umfassend mindestens ein Metalloxid, wobei das Gemisch an der Bildung der Matrix beteiligt ist und erlaubt, gleichzeitig eine problemlosere Fusion und eine bessere Beständigkeit gegenüber Wasser zu erreichen.

11. Matrix nach Anspruch 10, **dadurch gekennzeichnet, dass** sie durch Fusion bei einer Temperatur unter 1000 °C eines Gemischs radioaktiver Abfälle und verschiedener Oxide erhalten ist.

12. Matrix nach mindestens einem der Ansprüche 10 bis 11, **dadurch gekennzeichnet, dass** sie ferner 1 % bis 3 % Schmelzmittel im Verhältnis zu Gesamtmasse der Matrix ohne die Schmelzmittel umfasst.

13. Matrix nach mindestens einem der Ansprüche 10 bis 12, **dadurch gekennzeichnet, dass** sie ferner eine zusätzliche Menge Zinkoxid (ZnO) umfasst, so dass insgesamt an Anteil von mindestens 3,5 mol je 1 mol Cl⁻ und 7 mol je 1 mol SO₄²⁻, enthalten in den vorbehandelten radioaktiven Abfällen, erreicht wird.

14. Matrix nach mindestens einem der Ansprüche 10 bis 13, **dadurch gekennzeichnet, dass** das komplementäre Gemisch mindestens 0,4 mol Al₂O₃ und mindestens 0,8 mol ZnO je 1 mol Alkalioxid umfasst, das somit zu einem devitrifizierten Endprodukt führt.

15. Matrix nach mindestens einem der Ansprüche 10 bis 14, **dadurch gekennzeichnet, dass** die Alkalioxide unter Na₂O, K₂O, Li₂O sind.

16. Matrix nach mindestens einem der Ansprüche 10 bis 15, **dadurch gekennzeichnet, dass** das Gemisch eine oder mehrere folgende Verbindungen umfasst: Aluminumoxid (Al₂O₃), Kalk (CaO), Magnesiumoxid (MgO), Bariumoxid (BaO) und Zinkoxid (ZnO).

17. Matrix nach mindestens einem der Ansprüche 10 bis 16, **dadurch gekennzeichnet, dass** das molare Verhältnis Na₂O/B₂O₃ gleich 1,5 ist.

## Claims

1. Method for immobilising radioactive waste including at least alkaline salts in order to obtain an immobilisation matrix, the method including at least:
- a step (201, 401) of pretreatment of initial radioactive waste (200, 400) in order to obtain pretreated radioactive waste;
- a step (206, 406) of mixing pretreated radioactive waste with the addition of compounds capable of vitrifying or ceramifying the pretreated radioactive waste; such compounds include at least:
i. an alkaline borosilicate base with at least 0.7 to 1.5 mol of silica per mole of alkaline oxide contained in the pretreated radioactive waste,
ii. an oxide stabilising and protecting the matrix from corrosion in a quantity from 0.05 mol to 0.1 mol per mole of alkaline oxide contained in the pretreated radioactive waste,
iii. an additional mixture of oxides in a quantity from 0.8 mol to 2 mol per mole of alkaline oxide contained in the pretreated radioactive waste, the mixture including at least one metal oxide and participating in formation of the matrix and making it possible to obtain both easier melting and better water resistance,
- a step for calcining and then melting (202, 402) of the mixture at a temperature below 1050°C to obtain a molten mass;
- a step for cooling the molten mass to obtain (203, 403) a matrix for immobilisation of radioactive waste,
the initial radioactive waste being an evaporator concentrate, the pretreatment step including a step for extraction of 70% to 90% of borax (Na₂B₄O₇) from the initial radioactive waste, the pretreated radioactive waste obtained having a molar ratio of boric anhydride (B₂O₃) to alkaline oxides of between 0.15 and 1.

2. Method according to claim 1, **characterised in that** the calcining and then melting step includes a temperature-increasing step including the observation of stages interrupting the temperature increase for 2 h to 5 h between 550°C and 800°C.

3. Method according to at least one of claims 1 and 2, **characterised in that** during the calcining and then melting step, the mixture undergoes agitation.

4. Method according to at least one of claims 1 to 3, **characterised in that** the calcining and then melting step includes a step of melting a small portion of the calcined mixture, followed by a step of continuously and progressively adding the raw mixture to the molten bath up to the desired quantity of melted mixture.

5. Method according to at least one of claims 1 to 4, **characterised in that** the pretreatment step includes at least:
- a step of adjusting the concentration of initial radioactive waste by adding or extracting water;
- a step of adjusting the pH of the radioactive waste between 8.5 and 9.7 by adding acid and/or base preceding the cycles of the pretreatment step;
a first cycle of borax extraction including at least:
- a step of filtering the initial radioactive waste in order to remove sludge;
- a step of adjusting the concentration by evaporation in order to reach the borax solubility limit at a temperature of between 60°C and 100°C,
- a step of precipitating borax by cooling to a temperature of between 0°C and 25°C, the sludge and the floating portion being removed to form part of the pretreated radioactive waste,
any borax extraction cycles following the first borax extraction cycle including at least:
- a step of dissolving the borax obtained during the precipitation step of the preceding cycle by adding water at a temperature of between 60°C and 100°C,
- a step of precipitation by cooling to a temperature of between 0°C and 25°C, the floating portion obtained from this step being removed.

6. Method according to claim 5, **characterised in that**, between the dissolving step and the precipitation step of the borax extraction cycle or cycles following the first cycle, the following are added:
- a step of filtration in order to remove sludge,
- a step of concentration by evaporation in order to reach the borax solubility limit at a temperature of between 60°C and 100°C.

7. Method according to at least one of claims 5 to 6, **characterised in that**, during the dissolving step of the cycles following the first cycle or during the step of adjusting the concentration of the first cycle, the borate solubility limit is increased by adjusting the pH by adding acid and/or base so as to correspond to the metaborate (BO₂⁻) or pentaborate (B₅O₈⁻) and hydrogen tetraborate (HB₄O₇⁻) form, of maximum solubility.

8. Method according to at least one of claims 5 to 7, **characterised in that**, during the precipitation step of one or more of the cycles, the borate solubility limit is decreased by adjusting the pH by adding acid and/or base so as to correspond to the tetraborate (HB₄O₇²⁻) form, of minimum solubility.

9. Method according to at least one of claims 5 to 8, **characterised in that** the floating portions removed during a high-order cycle are recycled in the dissolving step or steps of one or more preceding cycles of a lower order or in the step of adjusting the concentration.

10. Matrix for immobilising radioactive waste including at least:
- alkaline salts of pretreated radioactive waste obtained from initial radioactive waste (200, 400) having undergone a step (201, 401) of pretreatment of waste,
- an alkaline borosilicate base including at least from 0.7 mol to 1.5 mol of silica per mole of alkaline oxide contained in the pretreated radioactive waste and 0.15 mol to 1 mol of boric anhydride (B₂O₃) per mole of alkaline oxide;
- at least one oxide stabilising and protecting the matrix from corrosion in a quantity from 0.05 mol to 0.1 mol per mole of alkaline oxide contained in the pretreated radioactive waste;
the radioactive waste having been pretreated in order to adjust the proportion of boric anhydride to alkaline oxides to a molar ratio of between 0.15 and 1;
the matrix being **characterised in that** it includes
- an additional mixture of oxides in a quantity from 0.8 mol to 2 mol per mole of alkaline oxide including at least one metal oxide, the mixture participating in formation of the matrix and making it possible to obtain both easier melting and better water resistance.

11. Matrix according to claim 10, **characterised in that** it is obtained by melting at a temperature below 1000°C of a mixture of the radioactive waste and different oxides.

12. Matrix according to at least one of claims 10 to 11, **characterised in that** it further includes 1% to 3% of solvents relative to the total mass of the matrix without the solvents.

13. Matrix according to at least one of claims 10 to 12, **characterised in that** it further includes an additional quantity of zinc oxide (ZnO) so as to reach in total a proportion of at least 3.5 mol per 1 mol of Cl⁻ and 7 mol per 1 mol of SO₄²⁻ contained in the pretreated radioactive waste.

14. Matrix according to at least one of claims 10 to 13, **characterised in that** the additional mixture includes at least 0.4 mol of Al₂O₃ and at least 0.8 mol of ZnO per 1 mol of alkaline oxide, thus resulting in a devitrified end product.

15. Matrix according to at least one of claims 10 to 14, **characterised in that** the alkaline oxides are among Na₂O, K₂O, Li₂O.

16. Matrix according to at least one of claims 10 to 15, **characterised in that** the mixture includes one or more of the following compounds: aluminium oxide (Al₂O₃), lime (CaO), magnesium oxide (MgO), barium oxide (BaO) and zinc oxide (ZnO).

17. Matrix according to at least one of claims 10 to 16, **characterised in that** the molar ratio of Na₂O/B₂O₃ is equal to 1.5.
